(19) Europäisches Patentamt / European Patent Office / Office européen des brevets

(11) **EP 2 403 889 B1**

(12) **EUROPEAN PATENT SPECIFICATION**

(45) Date of publication and mention
of the grant of the patent:
**01.07.2015 Bulletin 2015/27**

(21) Application number: **10707258.9**

(22) Date of filing: **01.03.2010**

(51) Int Cl.:
*C08G 18/38* (2006.01)     *C09D 201/00* (2006.01)

(86) International application number:
**PCT/EP2010/052516**

(87) International publication number:
**WO 2010/100097 (10.09.2010 Gazette 2010/36)**

(54) **COATING COMPOSITIONS CONTAINING COLOURED POLYMERS**

GEFÄRBTE POLYMERE ENTHALTENDE BESCHICHTUNGSZUSAMMENSETZUNGEN

COMPOSITIONS DE REVÊTEMENT CONTENANT DES POLYMÈRES COLORÉS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **03.03.2009 EP 09154183
03.03.2009 US 157025 P**

(43) Date of publication of application:
**11.01.2012 Bulletin 2012/02**

(73) Proprietor: **Akzo Nobel Coatings International B.V.
6824 BM Arnhem (NL)**

(72) Inventors:
• **JANS, Robertus Jozef Franciscus
NL-1161 VZ Zwanenburg (NL)**
• **STUIVER, Anthonie
NL-2431 XN Noorden (NL)**

(74) Representative: **Akzo Nobel IP Department
Velperweg 76
6824 BM Arnhem (NL)**

(56) References cited:
**EP-A- 0 531 106**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 403 889 B1

**Description**

The invention relates to coating compositions containing coloured polymers, and to a process for coating substrates using this coating composition.

An important characteristic of a coating is its colour. To achieve a certain colour, it is common practice to have paints or lacquers contain opacifying pigments, such as titanium dioxide, zinc oxide, leaded zinc oxide, and optionally tinting pigments, such as carbon black, yellow oxides, brown oxides, tan oxides, raw and burnt sienna or umber, chromium oxide green, cadmium pigments or chromium pigments.

A disadvantage of the use of pigments is that they need to be dispersed before they will efficiently generate colour. See for example British patent specification GB 1,530,022, which discloses coatings having a good hiding power which are prepared by dispersing the pigment in the binder. This dispersing process is expensive and labour intensive. Moreover, the resulting pigment dispersion is not always completely stable. The pigment particles can sediment and the viscosity can increase over time. This has a negative effect on the colour of the final paint.

An additional disadvantage associated with the use of pigments is that they may make coatings suffer from chalking and/or insufficient scrub resistance.

The problem underlying this invention is to provide a novel coating composition that - compared to prior art coatings having the same or similar hiding power - is less expensive and/or less labour intensive to make, has an equal or better appearance, and in addition may be less prone to chalking and/or scrubbing.

The invention solves this problem by providing a coating composition that in its dried or cured state derives its colour from (i) a coloured polymer obtainable by chemically bonding a polymer with an organic dye, and (ii) black and/or white particulate solids. The coating composition according to the invention differs from prior art coating compositions in that the pigments used in the latter have been eliminated from the recipe and that coloured polymers are used instead. The colour in the final coating layer is now provided by a coloured polymer obtainable by chemically bonding a polymer with an organic dye in combination with black and/or white particulate solids.

One advantage of the coating composition according to the invention is that due to the smaller weight fraction of chromophores, including a lower Pigment Volume Concentration (PVC) compared to prior art coatings, they are less costly to produce because of decreased raw materials costs.

Also, due to the lower pigment utilization per volume of coating produced, fewer demands are placed on equipment to disperse pigments or solids to ensure efficient colour generation.

It should be noted that coloured polymers of the type used in accordance with the invention have been described in the prior art. Belgian patent publication 702,309 describes the preparation of such coloured polymers and their use as colourants in nail polish. Similar disclosures can be found in British patent specifications GB 1,173,363, and GB-PS 1,193,152, which describe the use of coloured polymers in cosmetic applications. Coloured polymers are also disclosed in U.S. 4,178,422. EP-A 0 531 106 describes the use of coloured polymers to manufacture colour filters for use in colour liquid crystal display apparatus.

In a preferred embodiment, the coloured polymer used in the coating composition according to the invention is not an ethylsulfonate-alkylamine copolymer.

The coating composition according to the invention contains one or more coloured polymers. These polymers are made by reacting a starting polymer with a dye to form a chemical bond between the polymer and the dye. Each of the polymer and the dye must have reactive groups that together form the chemical bond. A chemical bond can be covalent or ionic (e.g. a salt). Examples of chemical bonds include amide, ester, urethane, ether, and salts, such as ammonium, carboxylate, and sulfonate

In general, the starting polymer can be any polymer commonly used as a film-forming or binder polymer in coating compositions. The starting polymer can also be of another type. In addition, the starting polymer need not be the same or of the same type as the binder polymer that also makes up the coating composition according to the invention. It is required, however, that the coloured polymer and the binder polymer are miscible and the polymers must be able to form a film together in the dried or cured state.

Typical examples of starting polymers for solvent borne coatings are colophonium resins, nitrocellulose, alkyd resins, and styrene-maleic anhydride copolymers. Examples of starting polymers for water borne coatings are polysaccharides, polyacrylamides, polyacrylic acids, and polyacrylic acid esters. For a more complete listing of potentially useful polymers: see the sections below on binders. The term "polymer" in this context includes both polymers and copolymers which may or may not be grafted.

Dyes that are useful for the purposes of this invention preferably are organic dyes. Suitable dyes contain hydroxyl and/or amino groups as reactive groups. Such dyes include Disperse Red 13, Disperse Blue 3, Disperse Yellow 9, Solvent Yellow 14, Direct Green 26, Direct Black 19, and Basic Orange 2. For a more extensive overview of organic dyes reference is made to the publications by The Society of Dyers and Colourists (UK), as well as The American Association of Textile Chemists and Colourists (USA). Reference is also made to K. Hunger (Ed), Industrial Dyes, Wiley-VCH Verlag GmbH & Co. KGaA, Weinheim (2003)

Other useful dyes are those described in the aforementioned BE 702,309, GB-PS 1,173,363, and GB-PS 1,193,152. For the purpose of this invention, the term "organic dye" can suitably be represented by the formula Z-X-Col, in which Z represents a reactive group-containing moiety, X represents nothing or a divalent moiety, and Col represents a cyclic or polycyclic dye residue, the molecular weight of the Z-X- portion of the molecule not exceeding 300. A preferred group is constituted by amino dyes having the formula NHR-X-Col, in which R is hydrogen, methyl, or ethyl, X represents $(CH_2)p$ in which p is 0 (zero) or an integer from 1 to 9, and Col represents a cyclic or polycyclic dye residue.

It is essential that in the final coating - i.e. the coating that is obtained after drying and/or curing - the coloured polymers are not present in the form of particles, but that they are film-forming in the same way as the resin polymers that make up the paint film itself. For example, when the coloured polymer is alkyd based and the actual binder is also alkyd based, the coloured polymer cocrosslinks with the actual binder alkyd upon drying and so becomes an integral part of the dried, crosslinked film.

The coloured polymers to be used in general have a total standard absorption A of at least 15 nm, preferably at least 25 nm, and more preferably at least 100 nm over the wavelength range of 360 to 780 nm. Measurement of A is carried out as described in the Examples.

The coloured polymer must be soluble in the liquid carrier of the coating composition.

In order to achieve the desired colour, the coloured polymer needs to be used in conjunction with an amount of black and/or white particulate solids.

Suitable examples of black particulate solids are carbon black, graphite, and iron oxide. Carbon black is preferred.

Suitable examples of white particulate solids are titanium dioxide and various crystal forms of calcium carbonate including chalk. Titanium dioxide is preferred.

The average particle diameter (Malvern) is usually in the range of less than 10 microns.

The inventors have surprisingly found that when a coloured polymer based on a dye is used, it is possible to provide hiding coatings with a colour that exceeds the maximum colour achievable utilizing the dye molecules themselves. And this while using black and/or white particulate solids only. This is noteworthy since, as said above, the coating composition according to the invention contains a relatively small amount of chromophores, i.e. coloured polymers plus pigments. If one were to attempt to achieve such hiding power using black and/or white particulate solids in conjunction with a dye, the amount of dye needed would readily exceed the solubility limit of regular coating compositions, resulting in their precipitating out. Attaching the dye or dyes to a polymer backbone that in the final coating forms an integral part of the coating film avoids this precipitation phenomenon and allows the formation of colours having good hiding power using a relatively small amount of chromophores. The coating composition according to the invention, when dried or cured, displays a contrast ratio that preferably is greater than 90%, and even more preferably greater than 95%, at an applied layer thickness of 100 μ. The contrast ratio is measured in a manner as described in H.G. Völz, Industrial Colour testing, Fundamentals and Techniques, Wiley-VCH (1995), on page 101. The contrast ratio stands for the ratio of reflectances on black and white substrates at equal film thickness X 100%. The coating is applied in a layer thickness of 100 μ on a black and on a white substrate. After drying or curing, the reflectance (= the amount of light reflected from the substance when illuminated in a spectrophotometer) of the coating on the black substrate is measured. The same is done for the coating on the white substrate. Next, the reflectance of the coating on the black substrate is divided by the reflectance of the coating on the white substrate and the ratio is multiplied by 100%. At perfect hiding, the reflectances are equal, the ratio of the reflectances is 1 and the contrast ratio is 100%. When there would be absolutely no hiding, the black substrate will be black, it will have a reflectance of 0 (zero), the ratio of the reflectances will be 0 (zero), and the contrast ratio will be 0 (zero) %.

The desired colour is achieved by combining the other usual coating ingredients with appropriate amounts of one or more appropriate coloured polymers and appropriate amounts of black and/or white particulate solids. Colour and appearance are expressed as Lightness employing the CIELAB notation system as described in G. Wyszecki and W.S. Stiles, Color Science Concepts and Methods, Quantitative Data and Formulae, John Wiley and Sons, Inc., New York, 1982.

For instance, if a red coloured polymer is used, a white particular solid can be added when a lighter shade of red is desired. The same holds for darker red colours, albeit that in that case a black particular solid is needed. A combination of white and black may also serve to achieve the desired colour while preserving the opacity and other desired appearance characteristics of the coating layer.

For the remainder, the coating composition according to the invention contains all the usual ingredients, a brief description of which follows below.

The coating composition contains a binder chosen from oxidatively drying polymers, ambient temperature cure epoxy-amines, physically drying acrylics or polyester binders or mixtures thereof.

Oxidatively drying polymers are polymers which crosslink on exposure to oxygen from air by virtue of containing unsaturated fatty acid residues. Alkyds are typical examples of such polymers. Alkyd paints cure under the influence of oxygen, via oxidative crosslinking of unsaturated fatty acid building blocks. Alkyd resins can be prepared from fatty acids, polycarboxylic acids, and di- or polyvalent hydroxyl compounds. Mono- and polyunsaturated fatty acids can be used, such as, e.g., lauroleic acid, myristoleic acid, palmitoleic acid, oleic acid, or ricinolinic acid; bi-unsaturated fatty acids, such as linoleic acid; tri-unsaturated acids, such as linolenic acid, eleostearic acid, and licanic acid; and other unsaturated fatty acids obtained from animal or vegetable oils. Optionally, saturated fatty acids may also be used, such as lauric acid, myristic acid, palmitic acid, or stearic acid. Other suitable monocarboxylic acids include tetrahydrobenzoic acid and hydrogenated or non-hydrogenated abietic acid. Examples of polycarboxylic acids include phthalic acid, isophthalic acid, terephthalic acid, trimellitic acid, succinic acid, adipic acid, azelaic acid, dimerized fatty acids, cyclopentane-1,2-dicarboxylic acid, cyclohexane-1,2-dicarboxylic acid, 4-methylcyclohexane-1,2-dicarboxylic acid, tetrahydrophthalic acid, cyclohexane-1,2,4,5-tetracarboxylic acid, and butane-1,2,3,4-tetracarboxylic acid. If so desired, the carboxylic acids may be used as anhydrides or in the form of an ester, e.g., an ester of an alcohol having 1-4 carbon atoms. In addition, the alkyd resin comprises di- or polyvalent hydroxyl compounds. Examples of suitable divalent hydroxyl compounds are ethylene glycol, 1,3-propane diol, 1,6-hexane diol, 1,12-dodecane diol, 3-methyl-1,5-pentane diol, 2,2,4-trimethyl-1,6-hexane diol, 2,2-dimethyl-1,3-propane diol, and 2-methyl-2-cyclohexyl-1,3-propane diol. Examples of suitable triols are glycerol, trimethylol ethane, and trimethylol propane. Suitable polyols having more than 3 hydroxyl groups are pentaerythritol, sorbitol, and etherification products of the compounds in question, such as ditrimethylol propane and di-, tri-, and tetrapentaerythritol. The alkyd resins can for example be obtained by direct esterification of the components, with the option of a portion of these components having been converted already into ester diols or polyester diols. Alternatively, the unsaturated fatty acids can be added in the form of a drying oil, such as sunflower oil, linseed oil, tuna fish oil, dehydrated castor oil, coconut oil, and dehydrated coconut oil. Transesterification with the other added acids and diols will then give the final alkyd resin.

Optionally, the alkyd resins may be styrenated and/or acrylated by grafting vinyl-functional building blocks to the olefinically unsaturated groups in the fatty acid residues. Solvent borne examples of vinyl modified alkyds are for instance described in WO 2005/116154. Water borne examples of such vinyl-modified examples are disclosed in WO 01/40336.

Further examples of oxidatively drying polymers are polyurethanes comprising fatty acid residues. Such a polyurethane may be prepared by reacting polyisocyanate(s) with isocyanate-reactive compound(s) by methods well-known in the prior art. Preferably, an isocyanate-terminated polyurethane prepolymer is first formed, which is chain extended with an active hydrogencontaining compound. If the polymer is made in such manner, the unsaturated fatty acid residue(s) bearing compound is introduced into the polyurethane backbone during the prepolymer formation and/or during the chain extension step. Alternatively, a polyurethane may be made by capping an isocyanate-terminated polyurethane with monofunctional isocyanate-reactive compounds or by using an excess of compounds having isocyanate-reactive groups during polymer preparation, or a combination of the above preparations may be used. Monomers bearing non-ionic or ionic water-dispersing or emulsifier groups can be included in the prepolymer formation to provide the facility of self-dispersibility in water. Preferred isocyanate-reactive compounds bearing unsaturated fatty acid residue(s) which may be used in the urethane synthesis may be obtained from the reaction, using techniques known in the art, of a suitable fatty acid with a hydroxyl- or amine-functional compound to provide a fatty acid residue-bearing compound with at least one (preferably at least two) hydroxyl- or amine isocyanate-reactive groups. Suitable fatty acids include fatty acids derived from castor oil, soybean oil, sunflower oil, tallow oil, linseed oil, and fatty acids such as linoleic acid, palmitoleic acid, linolenic acid, oleic acid, oleosteric acid, licanic acid, arachidonic acid, ricinoleic acid and/or mixtures thereof. Suitable polyisocyanates include aliphatic, cycloaliphatic, araliphatic and/or aromatic polyisocyanates. Examples of suitable polyisocyanates include ethylene diisocyanate, 1-6-hexamethylene diisocyanate, isophorone diisocyanate, cyclohexane-1,4-diisocyanate, 4,4'-dicyclohexylmethane diisocyanate, p-xylylene diisocyanate, tetramethylxylene diisocyanate, 1,4-phenylene diisocyanate, 2-4-toluene diisocyanate, 2,6-toluene diisocyanate, 4,4'-diphenylmethane diisocyanate, polymethylene polyphenylpolyisocyanates 2,4'-diphenylmethane diisocyanate, 3(4)-isocyanatomethyl-1-methyl cyclohexyl isocyanate, and 1,5-naphthylene diisocyanate. Mixtures of polyisocyanates can be used and also polyisocyanates which have been modified by the introduction of urethane, allophanate, urea, biuret, carbodiimide, uretonimine, uretdion or isocyanurate residues.

The coating composition can also be formulated as a latex paint, based on an aqueous polyvinyl emulsion. The water-insoluble binder can for example be an acrylic (co)polymer, vinyl acetate polymer, styrene/acrylic copolymer, ethylene/vinyl acetate copolymer, ethylene/vinyl chloride copolymer, and the like, or mixtures thereof.

The coating composition according to the present invention can also be formulated as a floor finish, e.g. for wooden floors. Typical binder systems for such applications are for example polyurethane acrylate copolymers or hybrids, e.g., in aqueous dispersion, optionally crosslinkable with carbonyl - hydrazine chemistry.

Other paint application areas will be apparent to the skilled person with the aid of this patent specification.

The liquid carrier can be water or it can comprise one or more organic solvents. Suitable solvents include esters, for example n-butyl acetate, ethyl acetate, and isobutyl acetate; ether alcohols, such as ethylene glycol monoethyl ether, ethylene glycol monobutyl ether, propylene glycol monomethyl ether, dipropylene glycol monoethyl ether, propylene glycol monoethylether acetate, ethylene glycol monoethylether acetate, dipropylene glycol monoethylether acetate, and diethylene glycol monoethylether acetate; ketones, such as methyl ethyl ketone, methyl n-butyl ketone, and methyl isobutyl ketone; lower alkanols containing 2 to 4 carbon atoms, such as ethanol, propanol, isopropanol, and butanol; and aromatic hydrocarbons, such as xylene, toluene, and naphtha. In solvent borne systems, water can be used in a water-in-oil emulsion as a filler. In water borne systems, co-solvents can be used, such as glycols.

The coating compositions of the present invention can contain additives such as plasticizers, antioxidants, light stabilizers, UV absorbers, thixotropic agents, anti-gassing agents, organic cosolvents, biocides, surfactants, flow control additives, catalysts, photoinitiators, and/or photosensitizers where appropriate:

The coating compositions of the invention can be applied to any of a variety of substrates including, e.g., metallic, polymeric, wooden, ceramic, concrete, and glass substrates. For example, the coating compositions can be formulated as wall paints, floor finishes, or trim paints, e.g., for windows, doors, or window and door frames, joint fillers, flooring screeds, leveling compounds, floor adhesives, tile adhesives, and the like.

The coating compositions according to the present invention can for instance be applied by brush or roller application.

The following Examples illustrate the invention.

## EXAMPLES

**Example 1**

Preparation of coloured polymer I

Placed in a flask were 21.3 grams (0.192 equiv.) of isophorone diisocyanate, 30 grams of dry methyl ethyl ketone, and 0.20 grams of dibutyl tin dilaurate. Over a period of 90 minutes and at constant ambient temperature, a mixture of 30 grams of dry tetrahydrofuran and 64 grams (0.1 equiv.) of an alkyd resin soluble in an organic solvent (OH value = 88 mg KOH/g) was dosed. After completion of the dosing, the temperature was raised to 55°C. After two hours, a solution of 0.03 equiv. of Disperse Red 13 (MW 347) in 20 grams of methyl ethyl ketone was added. The temperature was increased to 80°C and stirring was continued at this temperature for 2 hours. Next, 5 mls of ethanol were added to destroy any unreacted isocyanate. Stirring was continued at 80°C for another 3 hours, after which the product mixture was transferred into a one-necked flask and solvent was removed under vacuum by means of a rotation film evaporator. HPLC analysis indicated that the conversion of the dye was greater than 95%.

Preparation of coloured polymer II

Coloured polymer II was prepared in the same manner as coloured polymer I, except that use was made of water-soluble alkyd resin having an OH value of 89 mg KOH. HPLC analysis indicted greater than 95% dye conversion.

Preparation of coloured polymer III

Coloured polymer III was prepared in the same manner as coloured polymer I, except that use was made of Disperse Yellow 9 (MW 273). HPLC analysis indicated greater than 95% dye conversion.

**Example 2**

Measurement of the total standard absorption Ã

This measurement is carried out using Lambert Beer's law in the version that follows:

$$\tilde{A} = \int\limits_{360}^{780} A'(\lambda)d\lambda$$

in which

Ã = the total adsorption over the wavelength range of 360 to 780 nm; unit: nm
A' = the adsorption measured under standard conditions of c = 1 g/l and l = 1 cm (dimensionless)

The coloured polymers I, II, and II had the following total standard absorptions:

Table 1

| Polymer | Value of Ã (nm) |
|---|---|
| Coloured polymer I | 1,394 |
| Coloured polymer II | 270 |
| Coloured polymer III | 346 |

A comparative measurement was carried out on a very dark alkyd resin (16.6 Gardner). Its total adsorption A was 9 nm.

**Example 3**

Preparation of coating compositions according to the invention and of comparative coating compositions

White base paints were tinted using one of the above coloured polymers I, II or III.

For comparative purposes the base paints were also coloured with the dyes *per* se, and with pigment dispersions of similar colour.

The base paints were Rubbol® AZ HS W05 (ex-AkzoNobel Coatings, Sassenheim, The Netherlands) for the solvent borne coatings and Rubbol® BL Satin W05 (ex-AkzoNobel Coatings) for the water borne coatings. Both paints contain titanium dioxide.

The colourants used are as listed in Table 2 below.

Table 2

| Coloured polymer | | Dye | | Pigment dispersion |
|---|---|---|---|---|
| Polymer I | vs | Disperse Red 13 | vs | Acotint sR2 (PR 254) |
| Polymer II | vs | Disperse Red 13 | vs | Acomix wV2 (PR122) |
| Polymer III | vs | Disperse Yellow 9 | vs | Acotint sTY (PY 42) |

The pigment dispersions are commercially available from Akzo Nobel Coatings.

The amounts of colourants used are given in Table 3 below. These amounts were added to 10 grams of the base paint.

Table 3

| Exp. Number | Colourant | Amount added (grams) | Amount of chromophore added (grams) | wb or sb |
|---|---|---|---|---|
| 1 | Coloured polymer I | 0.5 | 0.041 | sb |
| 2* | Disperse Red 13 | 0.5 | 0.041 | sb |
| 3* | Acotint sR2 | 0.15 | 0.041 | sb |
| | | | | |
| 4 | Coloured polymer II | 0.5 | 0.014 | wb |
| 5* | Disperse Red 13 | 0.5 | 0.014 | wb |
| 6* | Acom ix wV2 | 0.07 | 0.014 | wb |
| | | | | |
| 7 | Coloured polymer III | 0.5 | 0.029 | sb |
| 8* | Disperse Yellow 9 | 0.5 | 0.029 | sb |
| 9* | Acotint sTY | 0.1 | 0.029 | sb |
| * = Comparative experiment | | | | |

## Example 4

Curing and measurements

The coating compositions of Example 3 were shaken for three minutes and applied on an opacity chart at 150 μm layer thickness. After drying colour measurements were carried out using a Macbeth M2020PL Colour Eye. The appearance of the dried coatings was also assessed.

The results are given in Table 4 below.

Table 4

| Exp. Nr. | L | a | b | C* | H* | Appearance |
|---|---|---|---|---|---|---|
| 1 | 64.9 | 35.3 | 8.7 | 36.3 | 13.8 | OK |
| 2 | 87.6 | 10.8 | 7.1 | 13 | 33.4 | Spots |
| 3 | 73.6 | 30.1 | 3.4 | 30.3 | 6.5 | OK |
| 4 | 66.8 | 30.2 | -3.3 | 30.4 | 353.5 | OK |
| 5 | 83.1 | 13.9 | -3.5 | 14.4 | 345.6 | Spots |
| 6 | 82.2 | 20.7 | -12.3 | 24.1 | 329.2 | OK |
| 7 | 89.0 | 2.2 | 25.9 | 26 | 85.0 | OK |
| 8 | 93.2 | 0.0 | 10.1 | 10.1 | 90.0 | Spots |
| 9 | 93.3 | 0.1 | 12.9 | 12.9 | 89.5 | OK |

As can be seen from the results in Table 4, the chroma of the coatings according to the invention in each case is superior to that of the comparisons. It furthermore follows that for the same hue, the use of the dyes *per se* leads to a spotty appearance. This is caused by the fact that the dyes precipitate out of the coating as a result of the relatively large amounts required.

The same coating compositions were also applied on black and white contrast substrates at an applied layer thickness of 100 μm to measure their contrast ratios. The contrast ratios all exceeded 95%.

## Claims

1. A coating composition comprising

   - a binder, chosen from oxidatively drying polymers, ambient temperature cure epoxy-amines, physically drying acrylics or polyester binders or mixtures thereof,
   - a liquid carrier,
   - one or more usual paint additives,
   - a film-forming coloured polymer obtainable by chemically bonding a polymer with an organic dye, and
   - black and/or white particulate solids.

2. A coating composition according to claim 1 wherein the coloured polymer has a total standard absorption of greater than 15 nm over the wavelength range of 360 to 780 nm.

3. A coating composition according to claim 1 or 2 wherein the contrast ratio of the coating after drying or curing is greater than 95% at an applied layer thickness of 100 μ.

4. A process for coating a substrate, **characterized in that** the substrate is coated with a coating composition according to any one of claims 1 to 3.

## Patentansprüche

1. Beschichtungszusammensetzung mit

- einem Bindemittel, ausgewählt aus oxidativ trocknenden Polymeren, bei Umgebungstemperatur aushärtenden Epoxydaminen, physikalisch trocknenden Acrylen oder Polyesterbindemitteln oder Mischungen davon,
- einem flüssigen Trägerstoff,
- einem oder mehreren üblichen Farbadditiven,
- einem filmbildenden, gefärbten Polymer, erhältlich durch chemisches Binden eines Polymers an einen organischen Farbstoff, und
- schwarzen und/oder weißen partikelförmigen Feststoffen.

**2.** Beschichtungszusammensetzung nach Anspruch 1, wobei das gefärbte Polymer eine Standard-Gesamtabsorption von größer als 15 nm über den Wellenlängenbereich von 360 bis 780 nm hat.

**3.** Beschichtungszusammensetzung nach Anspruch 1 oder 2, wobei das Kontrastverhältnis der Beschichtung nach dem Trocknen oder Aushärten bei einer aufgetragenen Schichtdicke von 100 $\mu$ größer als 95% ist.

**4.** Verfahren zum Beschichten eines Substrates, **dadurch gekennzeichnet, dass** das Substrat mit einer Beschichtungszusammensetzung nach einem der Ansprüche 1 bis 3 beschichtet ist.

**Revendications**

**1.** Composition de revêtement comprenant

- un liant, choisi parmi des polymères séchant par oxydation, des époxy-amines de durcissement à température ambiante, des acryliques à séchage physique ou des liants de polyester ou des mélanges de ceux-ci,
- un support liquide,
- un ou plusieurs additif(s) de peinture usuel(s),
- un polymère coloré filmogène pouvant être obtenu par liaison chimique d'un polymère avec un colorant organique, et
- des solides particulaires blancs et/ou noirs.

**2.** Composition de revêtement selon la revendication 1, dans laquelle le polymère coloré a une absorption normale totale supérieure à 15 nm sur la plage des longueurs d'onde allant de 360 à 780 nm.

**3.** Composition de revêtement selon la revendication 1 ou 2, dans laquelle le rapport de contraste du revêtement après séchage ou durcissement est supérieur à 95% à une épaisseur de couche appliquée de 100 $\mu$.

**4.** Procédé de revêtement d'un substrat, **caractérisé en ce que** le substrat est revêtu d'une composition de revêtement selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1530022 A
- BE 702309
- GB 1173363 A
- GB PS1193152 A
- US 4178422 A
- EP 0531106 A
- GB PS1173363 A
- WO 2005116154 A
- WO 0140336 A

### Non-patent literature cited in the description

- Industrial Dyes. Wiley-VCH Verlag GmbH & Co. KGaA, 2003
- **H.G. VÖLZ.** Industrial Colour testing, Fundamentals and Techniques. Wiley-VCH, 1995, 101
- **G. WYSZECKI ; W.S. STILES.** Color Science Concepts and Methods, Quantitative Data and Formulae. John Wiley and Sons, Inc, 1982